# EUROPEAN PATENT SPECIFICATION

(11) **EP 3 067 137 B1**
(45) Date of publication and mention of the grant of the patent: **08.06.2022**
(21) Application number: 16158418.0
(22) Date of filing: 03.03.2016
(51) Int. Cl.: B23D 51/02, B23D 59/00

(54) **CUTTING TOOL**
SCHNEIDWERKZEUG
OUTIL DE DÉCOUPE

(30) Priority: 12.03.2015 JP 2015049649
(43) Date of publication of application: 14.09.2016
(73) Proprietor: Panasonic Intellectual Property Management Co., Ltd., Osaka-shi, Osaka 540-6207 (JP)
(72) Inventor: Ikeda, Masaki, Osaka-shi, Osaka 540-6207 (JP); Tsuruta, Naoki, Osaka-shi, Osaka 540-6207 (JP)
(74) Representative: Appelt, Christian W.

(56) References cited:
- WO-A1-2013/163588
- JP-A- H09 164 508
- US-A- 5 010 652
- US-A1- 2003 226 438
- US-A1- 2010 032 178
- US-A1- 2011 251 727
- US-A1- 2012 000 080

## Description

This disclosure relates to an electric cutting tool according to the preamble of claim 1, US2012/000080 and WO2013/163588 disclose such a tool.

An electric cutting tool, such as a circular saw or a jigsaw, drives a blade with a motor to cut a cut subject.

The circular saw, which is a cutting tool, includes a protection cover that extends around the upper side of the blade (circular sawblade) and covers most of the blade. Japanese Laid-Open Patent Publication No. 9-164508 describes a circular saw provided with a protection cover. The edge of the blade may be extended out of an opening of the protection cover so that the blade edge can be positioned. Alternatively, the protection cover may include a transparent portion so that the blade edge can be seen when positioned. As another option, the circular saw may include a mark at a position located along a line extending in the lateral direction, which is orthogonal to the feed direction (forward direction) of the blade, from where the blade edge is located so that the blade edge can be positioned using the mark.

The subject cut by the cutting tool is usually marked with a cutting line (pencil mark). When cutting the cut subject along the cutting line with the blade, sawdust is scattered from the cut subject. Thus, a large opening in the protection cover is not desirable for safety reasons. When the protection cover is transparent, sawdust such as burned metal grains may cloud the cover and hide the blade edge. When the cutting tool is marked to indicate the cutting edge, the mark is only a reference. This may result in deviation of the cut position from the cutting line. For such reasons, it is difficult to accurately position the blade edge.

US 2012/000080 A1 describes a hand-held jigsaw that includes a saw blade and control element for automating a tracking the saw blade, the hand-held jigsaw, or both along layout lines. A sensor, preferably a camera unit, detects a layout line provided on a work piece.

WO 2013/163588 A1 describes systems and methods that relate generally to facilitate performing a task on a surface such as woodworking or printing. More specifically, this disclosure relates to mapping the surface of the material and determining the precise location of a tool in reference to the surface of a material.

It would be desirable to provide a cutting tool that allows for accurate positioning of the blade edge.

One embodiment of a cutting tool includes a drive source, a cutting blade driven by the drive source, a cutting line detector that detects a cutting line marked on a surface of a cut subject, a deviation determination unit that determines whether or not deviation of a location of the cutting blade from a location of the cutting line detected by the cutting line detector is greater than a threshold value, and a notification unit that notifies a user when the deviation determination unit determines that the deviation is greater than the threshold value.

The cutting tool according to this disclosure allows for accurate positioning of the blade edge.

Other embodiments and advantages of this disclosure will become apparent from the following description, taken in conjunction with the accompanying drawings, illustrating by way of example the principles of the invention.

The embodiments, together with objects and advantages thereof, may best be understood by reference to the following description of the presently preferred embodiments together with the accompanying drawings in which:
Fig. 1 is a perspective view illustrating one embodiment of a circular saw;
Fig. 2 is a side view illustrating the circular saw of Fig. 1;
Fig. 3 is a perspective view illustrating the circular saw of Fig. 1 when performing a task;
Fig. 4 is a schematic diagram illustrating a cutting line detector;
Fig. 5 is a schematic block diagram illustrating the electric configuration of the circular saw illustrated in Fig. 1;
Fig. 6 is a schematic diagram illustrating a cutting line and a threshold value;
Fig. 7 is a schematic plan view illustrating a threshold setting unit of the circular saw illustrated in Fig. 1;
Fig. 8 is a schematic diagram illustrating various types of cutting lines; and
Fig. 9 is a side view illustrating a further example of a circular saw.

A circular saw 1, which is one embodiment of a cutting tool, will now be described with reference to the drawings.

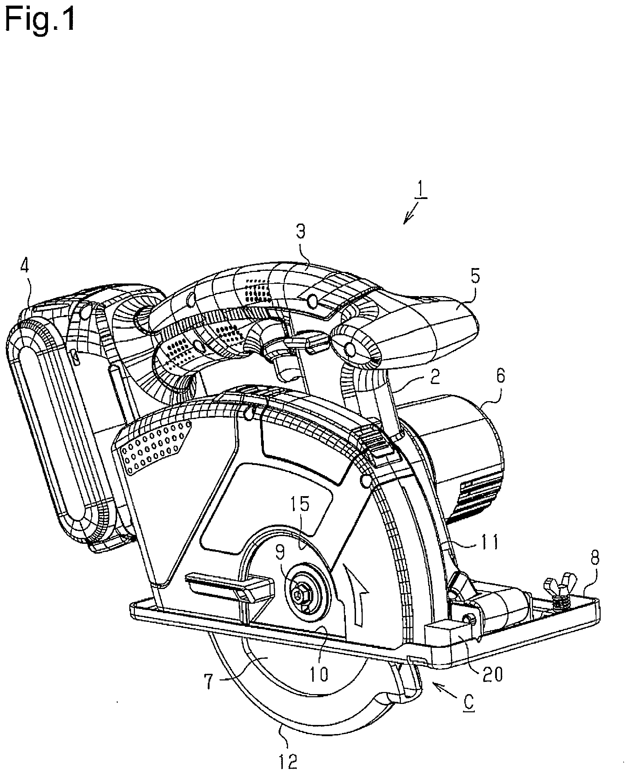

As illustrated in Fig. 1, the circular saw 1 includes a body 2 and a holding portion 3, which extends in the front-rear direction. The holding portion 3 may be a curved bar. A battery pack 4, which serves as a power supply, is attached to the rear end of the holding portion 3. A handle 5 is arranged on the distal end of the holding portion 3. For example, a user holds the holding portion 3 with one hand and places the other hand on the handle 5 to perform a cutting task. The circular saw 1 further includes a motor 6, which serves as a drive source, and a circular sawblade 7, which serves as a cutting blade. A reduction drive (not illustrated), which is accommodated in the body 2, connects the circular sawblade 7 to the motor 6, which drives the circular sawblade 7. The motor 6 is located on one side of the body 2, and the circular sawblade 7 is located on the other side of the body 2.

A rotation shaft 9, which extends from the reduction drive, projects sideward from the body 2. Further, a flat base 8, which includes an opening 10, is arranged on the lower portion of the body 2. When the circular sawblade 7 is coupled to the rotation shaft 9, a portion of the circular sawblade 7 projects downward from the opening 10 of the base 8. The circular sawblade 7 is arranged on the body 2 so that a rotational plane of the circular sawblade 7 is generally parallel to a plane extending perpendicular to the lateral direction of the body 2.

The circular sawblade 7 is provided with an upper cover 11 and a lower cover 12, each serving as a protection cover. The covers 11 and 12 cover the blade edge of the circular sawblade 7, formed on the blade circumference, and the two side surfaces of the circular sawblade 7 in the vicinity of the blade circumference.

The upper cover 11, which has a thickness in the axial direction of the rotation shaft 9, has the form of, for example, a thin box including an opening in the lower portion. Aside surface of the upper cover 11 includes, for example, a generally semi-circular opening 15 in the vicinity of the rotation shaft 9. The upper cover 11 is supported integrally with the circular sawblade 7 by the body 2. When the circular sawblade 7 is supported by the rotation shaft 9, the upper cover 11 covers the upper half of the circular sawblade 7, more specifically, the circumferential portion of the circular sawblade 7 that projects toward the upper side from the base 8.

The lower cover 12 has a generally U-shaped cross-section. In other words, the lower cover 12 is arcuate and extends along the circumference of the circular sawblade 7. In the same manner as the upper cover 11, the lower cover 12 is supported integrally with the circular sawblade 7 by the body 2. When the circular sawblade 7 is supported by the rotation shaft 9, the lower cover 12 covers the lower half of the circular sawblade 7, more specifically, the circumferential portion of the circular sawblade 7 that projects toward the lower side from the base 8.

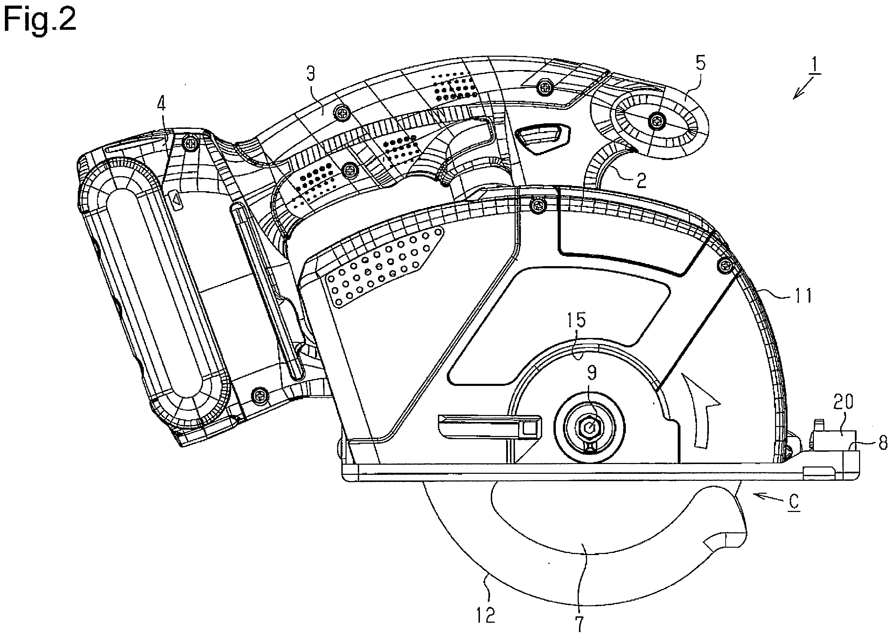

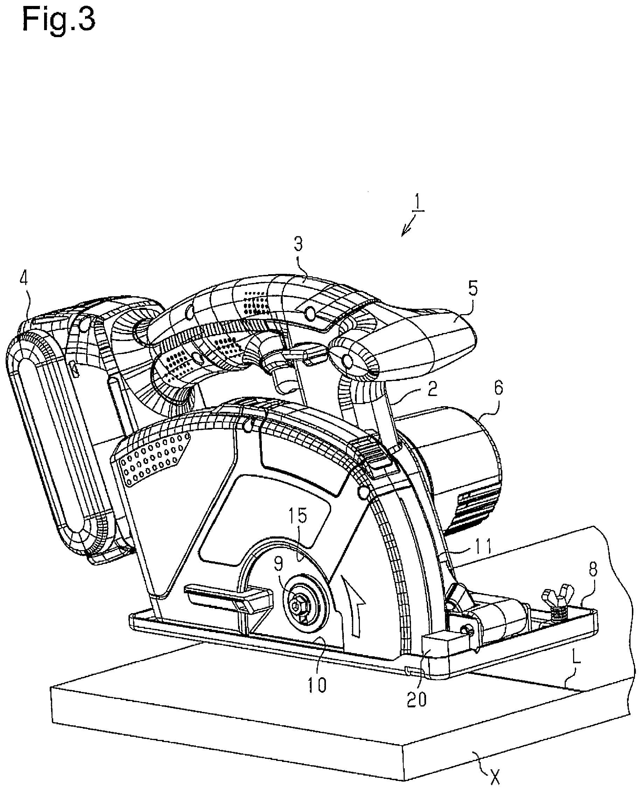

As illustrated in Fig. 2, the distal end of the lower cover 12 includes an opening. The blade edge of the circular sawblade 7 extends out of the opening. The blade edge of the circular sawblade 7 that extends out of the opening serves as a cutting portion C that cuts a cut subject X (refer to Fig. 3).

When using the circular saw 1, the user holds the holding portion 3 and the handle 5 and abuts the blade edge (cutting portion C) of the circular sawblade 7 against the cut subject X and positions the blade edge. The user turns on a power switch (not illustrated), which is arranged on the body 2, to rotate the circular sawblade 7. As illustrated in Fig. 3, a cutting line L (e.g., pencil mark) is marked on the surface of the cut subject X. The user moves the circular sawblade 7 along the cutting line L and cuts the cut subject X along the cutting line L.

As illustrated in Fig. 3, the circular saw 1 includes a cutting line detector 20, which is located on the base 8 in front of the upper cover 11 (circular sawblade 7). The cutting line detector 20 detects the cutting line L marked on the surface of the cut subject X. The cutting line detector 20 is located along a line extending in the cutting direction of the circular sawblade 7 in front of the circular sawblade 7.

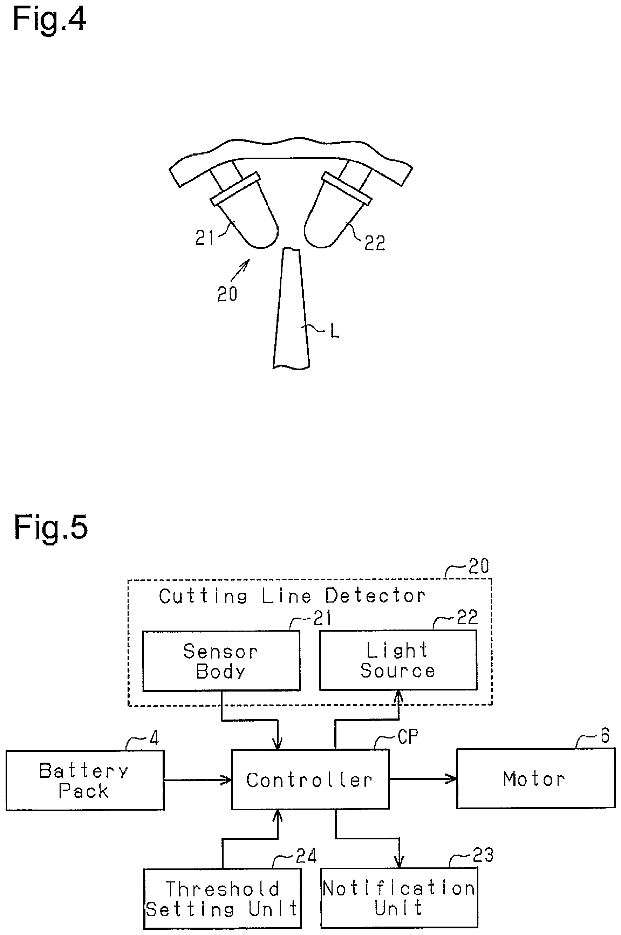

As illustrated in Figs. 4 and 5, the cutting line detector 20 includes a sensor body 21, which includes, for example, an image sensor, and a light source 22, which includes, for example a light emitting diode (LED). In the present example, the sensor body 21 captures an image in a detection range (imaging range) and sends the captured image to a controller CP (refer to Fig. 5), which is electrically connected to the sensor body 21. The light source 22 illuminates the detection range of the sensor body 21. For example, when the base 8 contacts the cut subject X, the light source 22 brightly illuminates the region around the cutting line L and facilitates detection of the cutting line L with the sensor body 21.

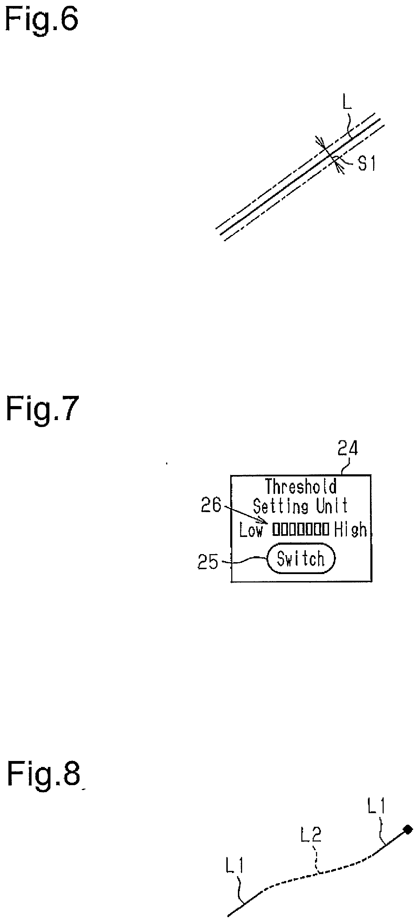

As illustrated in Fig. 5, the circular saw 1 includes a notification unit 23 that issues a given notification to the user. The notification unit 23 notifies the user when the deviation of the circular sawblade 7 from the cutting line L, which is detected by the cutting line detector 20, exceeds a threshold value S1 (refer to Fig. 6), which sets a tolerable deviation range. The notification unit 23 may issue a notification through a voice message or a displayed message.

As illustrated in Fig. 5, the circular saw 1 includes a threshold setting unit 24 used to set the threshold value S1. For example, as illustrated in Fig. 7, the threshold setting unit 24 includes a selection switch 25, which is operated by the user, and an indicator 26, which is lighted in multiple steps in accordance with the operation of the selection switch 25. This configuration allows the user to operate the selection switch 25 and vary the threshold value S1 in multiple steps. The threshold setting unit 24 sets the threshold value S1 to a value selected by the user.

The electrical configuration of the circular saw 1 will now be described.

As illustrated in Fig. 5, the controller CP of the circular saw 1 includes a battery pack 4, a motor 6, a cutting line detector 20 (sensor body 21 and light source 22 in the present example), the notification unit 23, and the threshold setting unit 24. The controller CP controls and drives the motor 6 with power supplied from the battery pack 4.

The controller CP obtains an image captured by the sensor body 21 of the cutting line detector 20 and performs, for example, edge detection to detect the location of the cutting line L in the image. The edge detection may be achieved by performing, for example, a differential calculation but is not limited to the differential calculation. For example, the controller CP refers to an image to obtain a difference in the brightness of the pixels of the cutting line L and the brightness of the surrounding pixels. Then, the controller CP uses the brightness difference to detect the location of the cutting line L. The controller CP activates the light source 22 when capturing an image. This illuminates the detection range of the sensor body 21 with the light source 22.

When the controller CP detects the location of the cutting line L in an image, the controller CP compares the location of the cutting line L and the location of the circular sawblade 7 in the image. The location of the circular sawblade 7 in an image captured by the cutting line detector 20 is acknowledged in advance by the controller CP. In the present example, the cutting line detector 20 is located along a line extending in the cutting direction of the circular sawblade 7. In this case, for example, the controller CP acknowledges that the circular sawblade 7 is located along a line extending through the image center in the cutting direction and that the circular sawblade 7 will cut the cutting subject X along the line that extends through the image center. The controller CP compares the location of the cutting line L with the location of the circular sawblade 7 in the image to determine the deviation of the circular sawblade 7 from the cutting line L (deviation in direction generally perpendicular to cutting direction). Then, the controller CP determines whether or not the deviation of the circular sawblade 7 from the cutting line L is greater than the threshold value S1 (refer to Fig. 6). When the deviation is greater than the threshold value S1, the controller CP sends a notification request signal to the notification unit 23. In response to the notification request signal, the notification unit 23 notifies the user that the deviation is greater than the threshold value S1. In the present example, the controller CP corresponds to a deviation determination unit.

The threshold value S1 can be varied by the user in multiple steps as described above. When the selection switch 25 is operated by the user, the controller CP lights the indicator 26 at a position corresponding to the threshold value S1 selected by the user.

The circular saw 1 of the present embodiment has the advantages described below.
(1) The cutting line detector 20 detects the cutting line L that is marked on the surface of the cut subject X. The controller CP compares the location of the cutting line L detected by the cutting line detector 20 with the location of the circular sawblade 7 (cut location). Then, the controller CP determines whether or not the deviation of the circular sawblade 7 from the cutting line L is greater than the threshold value S1. When the deviation of the circular sawblade 7 from the cutting line L is greater than the threshold value S1, the notification unit 23 notifies the user that the deviation is greater than the threshold value S. The notification allows the user to position the blade edge so that the deviation is less than the threshold value S1.
(2) The circular saw 1 includes the threshold setting unit 24 that allows the user to vary the threshold value S1 (tolerable deviation range) in accordance with the accuracy required for a cutting task. This improves convenience for the user.

It should be apparent to those skilled in the art that the foregoing embodiments may be employed in many other specific forms without departing from the scope of the invention. Particularly, it should be understood that the foregoing embodiments may be employed in the following forms.

Although not particularly mentioned above, the type of the cutting line L (line type) marked on the cut subject X may be changed. Further, the content of the notification issued by the notification unit 23 may be changed in accordance with the line type. For example, referring to Fig. 8, the content of the notification issued when a linear cutting line L1 is detected may differ from the content of the notification issued when a curved cutting line L2 is detected. In Fig. 8, the linear cutting line L1 is a solid line, and the curved cutting line L2 is a broken line. Gaps are included between the line segments of the broken cutting line L2. The controller CP performs edge detection to obtain the length of the gaps and determine whether the line type is a broken line (L2) or a solid line (L1). The detection of the broken line is not limited to edge detection. Further, the line types are not limited to the solid line and the broken line. Further, in addition to the notification content of the notification unit 23, the threshold value S1 may be varied in accordance with the line type. For example, the threshold setting unit 24 may change the threshold value S1 in accordance with the line type.

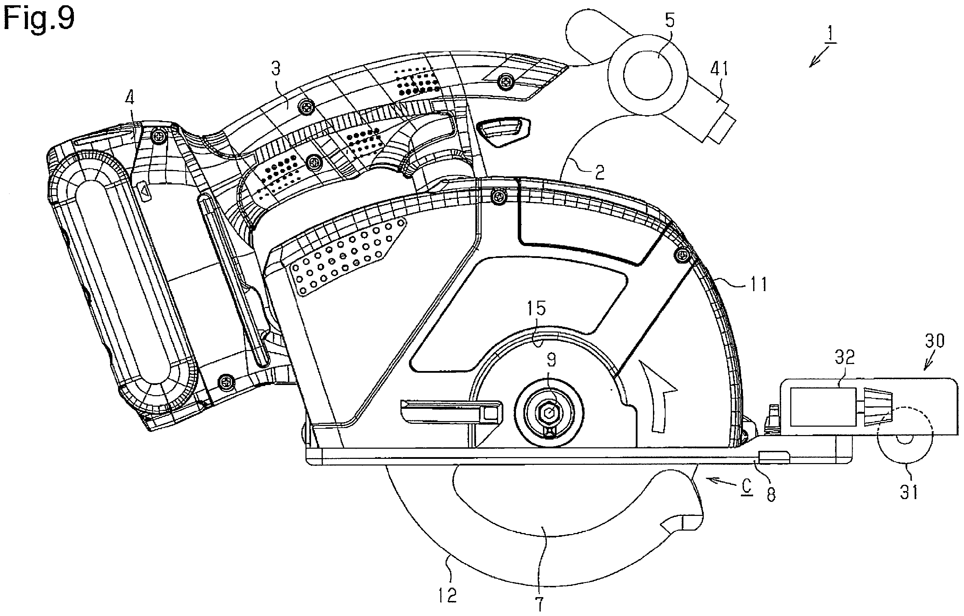

Although not particularly mentioned above, a blade guide may be used to guide the movement of the circular sawblade 7 so that cutting is performed along the cutting line L. One example of a blade guide will now be described with reference to Fig. 9. A blade guide 30 is located in front of the upper cover 11 on the base 8. The blade guide 30 includes a wheel 31 and an actuator 32, which steers the wheel 31. The actuator 32 is driven and controlled by, for example, the controller CP (refer to Fig. 5). The controller CP, for example, controls and drives the actuator 32 to change the rolling direction of the wheel 31. That is, the controller CP changes the rolling direction of the wheel 31 so that the circular sawblade 7 cuts the cut subject S along the cutting line L. This improves the working efficiency of the user.

Although not particularly mentioned above, as illustrated in Fig. 9, a light guide 41 may be used to emit light toward the cutting line L. The light guide 41 may be a laser pointer that is capable of emitting light. For example, the light guide 41 may be attached to the handle 5 to emit light onto a line extending in the cutting direction of the circular sawblade 7. This facilitates the positioning of the circular sawblade 7.

In the above embodiment, the circular saw 1 is used as a cutting tool. However, the cutting tool is not limited to a circular saw. For example, the cutting tool may be applied to a cutting tool such as a jigsaw or a reciprocating saw that includes a sawblade (linear blade) moved back and forth.

The present examples and embodiments are to be considered as illustrative and not restrictive, and the invention is not to be limited to the details given herein, but may be modified within the scope of the appended claims.

## Claims

1. A cutting tool (1) comprising:
a drive source (6);
a cutting blade (7) driven by the drive source (6);
a cutting line detector (20) configured to detect a cutting line (L) marked on a surface of a cut subject (X);
a deviation determination unit (CP) configured to determine whether or not deviation of a location of the cutting blade (7) from a location of the cutting line (L) detected by the cutting line detector (20) is greater than a threshold value (S1);
a notification unit (23) configured to notify a user when the deviation determination unit (CP) determines that the deviation is greater than the threshold value (S1); and
a threshold setting unit (24) configured to set the threshold value (S1) to a value selected by the user,
the cutting tool (1) being **characterized in that**
the threshold setting unit (24) includes a selection switch (25) configured to be operated by the user to vary the threshold value (S1) in multiple steps and an indicator (26) configured to be lighted in multiple steps in accordance with the operation of the selection switch (25).

2. The cutting tool (1) according to claim 1, wherein the cutting tool (1) is configured such that, when the selection switch (25) is operated by the user, the indicator (26) is lit at a position corresponding to the threshold value (S1) selected by the user.

3. The cutting tool (1) according to claim 1 or 2, wherein the notification unit (23) is configured to change a notification content in accordance with a type (L1;L2) of the cutting line (L).

4. The cutting tool (1) according to claim 2, wherein the threshold setting unit (24) is configured to change the threshold value (S1) in accordance with a type (L1;L2) of the cutting line (L).

5. The cutting tool (1) according to any one of claims 1 to 4, wherein
the cutting line detector (20) includes an image sensor (21) configured to capture an image in a detection range, and
the deviation determination unit (CP) is configured to detect the location of the cutting line (L) in the image captured by the image sensor (21) and determine the deviation by comparing the location of the cutting blade (7) and the location of the cutting line (L) in the image.

6. The cutting tool (1) according to any one of claims 1 to 5, further comprising a blade guide (30) configured to guide movement of the cutting blade (7) so that the cut subject (X) is cut along the cutting line (L) detected by the cutting line detector (20).

7. The cutting tool (1) according to any one of claims 1 to 6, further comprising a light guide (41) configured to emit light toward the cutting line (L) marked on the surface of the cut subject (X).

## Patentansprüche

1. Schneidwerkzeug (1), aufweisend:
eine Antriebsquelle (6);
eine Schneidklinge (7), die durch die Antriebsquelle (6) angetrieben wird;
einen Schneidliniendetektor (20), der konfiguriert ist, um eine Schneidlinie (L) zu erfassen, die auf einer Oberfläche eines Schneidobjekts (X) markiert ist;
eine Abweichungsbestimmungseinheit (CP), die konfiguriert ist, um zu bestimmen, ob eine Abweichung einer Position der Schneidklinge (7) von einer Position der Schneidlinie (L), die von dem Schneidliniendetektor (20) erfasst ist, größer als ein Schwellenwert (S1) ist oder nicht;
eine Benachrichtigungseinheit (23), die konfiguriert ist, um einen Benutzer zu benachrichtigen, wenn die Abweichungsbestimmungseinheit (CP) bestimmt, dass die Abweichung größer als der Schwellenwert (S1) ist; und
eine Schwellenwerteinstelleinheit (24), die konfiguriert ist, um den Schwellenwert (S1) auf einen Wert einzustellen, der von dem Benutzer ausgewählt ist,
wobei das Schneidwerkzeug (1) **dadurch gekennzeichnet ist, dass**
die Schwellenwerteinstelleinheit (24) einen Wählschalter (25), der konfiguriert ist, um von dem Benutzer betätigt zu werden, um den Schwellenwert (S1) in mehreren Schritten zu ändern, und eine Anzeige (26), die konfiguriert ist, um in mehreren Schritten entsprechend der Betätigung des Wählschalters (25) aufzuleuchten, enthält.

2. Schneidwerkzeug (1) nach Anspruch 1, wobei das Schneidwerkzeug (1) konfiguriert ist, um bei einer Betätigung des Wählschalters (25) durch den Benutzer die Anzeige (26) an einer Position aufleuchten zu lassen, die dem Schwellenwert (S1) entspricht, der von dem Benutzer ausgewählt ist.

3. Schneidwerkzeug (1) nach Anspruch 1 oder 2, wobei die Benachrichtigungseinheit (23) konfiguriert ist, um einen Benachrichtigungsinhalt in Abhängigkeit von einem Typ (L1; L2) der Schneidlinie (L) zu ändern.

4. Schneidwerkzeug (1) nach Anspruch 2, wobei die Schwellenwerteinstelleinheit (24) konfiguriert ist, um den Schwellenwert (S1) in Abhängigkeit von einem Typ (L1; L2) der Schneidlinie (L) zu ändern.

5. Schneidwerkzeug (1) nach einem der Ansprüche 1 bis 4, wobei der Schneidliniendetektor (20) einen Bildsensor (21) enthält, der konfiguriert ist, um ein Bild in einem Erfassungsbereich aufzunehmen, und
die Abweichungsbestimmungseinheit (CP) konfiguriert ist, um die Position der Schneidlinie (L) in dem Bild, das von dem Bildsensor (21) aufgenommen ist, zu erfassen und die Abweichung durch ein Vergleichen der Position der Schneidklinge (7) und der Position der Schneidlinie (L) in dem Bild zu bestimmen.

6. Schneidwerkzeug (1) nach einem der Ansprüche 1 bis 5, ferner eine Klingenführung (30) aufweisend, die konfiguriert ist, um eine Bewegung der Schneidklinge (7) so zu führen, dass das Schneidobjekt (X) entlang der Schneidlinie (L) geschnitten wird, die von dem Schneidliniendetektor (20) erfasst wird.

7. Schneidwerkzeug (1) nach einem der Ansprüche 1 bis 6, ferner einen Lichtleiter (41) aufweisend, der konfiguriert ist, um Licht in Richtung der Schneidlinie (L) auszusenden, die auf der Oberfläche des Schneidobjekts (X) markiert ist.

## Revendications

1. Outil de coupe (1) comprenant :
une source d'entraînement (6) ;
une lame de coupe (7) entraînée par la source d'entraînement (6) ;
un détecteur de ligne de coupe (20) configuré de manière à détecter une ligne de coupe (L) marquée sur une surface d'un sujet coupé (X) ;
une unité de détermination d'écart (CP) configurée de manière à déterminer si l'écart d'un emplacement de la lame de coupe (7) par rapport à un emplacement de la ligne de coupe (L) détectée par le détecteur de ligne de coupe (20) est supérieur ou non à une valeur de seuil (S1) ;
une unité de notification (23) configurée de manière à notifier un utilisateur lorsque l'unité de détermination d'écart (CP) détermine que l'écart est supérieur à la valeur de seuil (S1) ; et
une unité de réglage de seuil (24) configurée de manière à régler la valeur de seuil (S1) à une valeur sélectionnée par l'utilisateur ;
l'outil de coupe (1) étant **caractérisé en ce que** :
l'unité de réglage de seuil (24) inclut un commutateur de sélection (25) configuré de manière à être exploité par l'utilisateur afin de faire varier la valeur de seuil (S1) en plusieurs étapes, et un indicateur (26) configuré de manière à être allumé en plusieurs étapes conformément à l'exploitation du commutateur de sélection (25).

2. Outil de coupe (1) selon la revendication 1, dans lequel l'outil de coupe (1) est configuré de sorte que, lorsque le commutateur de sélection (25) est exploité par l'utilisateur, l'indicateur (26) est allumé à une position correspondant à la valeur de seuil (S1) sélectionnée par l'utilisateur.

3. Outil de coupe (1) selon la revendication 1 ou 2, dans lequel l'unité de notification (23) est configurée de manière à modifier un contenu de notification conformément à un type (L1 ; L2) de la ligne de coupe (L).

4. Outil de coupe (1) selon la revendication 2, dans lequel l'unité de réglage de seuil (24) est configurée de manière à modifier la valeur de seuil (S1) conformément à un type (L1 ; L2) de la ligne de coupe (L).

5. Outil de coupe (1) selon l'une quelconque des revendications 1 à 4, dans lequel :
le détecteur de ligne de coupe (20) inclut un capteur d'image (21) configuré de manière à capturer une image dans une plage de détection ; et
l'unité de détermination d'écart (CP) est configurée de manière à détecter l'emplacement de la ligne de coupe (L) dans l'image capturée par le capteur d'image (21) et à déterminer l'écart en comparant l'emplacement de la lame de coupe (7) et l'emplacement de la ligne de coupe (L) dans l'image.

6. Outil de coupe (1) selon l'une quelconque des revendications 1 à 5, comprenant en outre un guide-lame (30) configuré de manière à guider le mouvement de la lame de coupe (7) de sorte que le sujet coupé (X) est coupé le long de la ligne de coupe (L) détectée par le détecteur de ligne de coupe (20).

7. Outil de coupe (1) selon l'une quelconque des revendications 1 à 6, comprenant en outre un guide de lumière (41) configuré de manière à émettre de la lumière vers la ligne de coupe (L) marquée sur la surface du sujet coupé (X).
